# EUROPÄISCHE PATENTSCHRIFT

(11) **EP 1 510 123 B1**
(45) Veröffentlichungstag und Bekanntmachung des Hinweises auf die Patenterteilung: **03.01.2007**
(21) Anmeldenummer: 04018797.3
(22) Anmeldetag: 07.08.2004
(51) Int. Cl.: A01D 57/04

(54) **Verfahren und Vorrichtung zur Steuerung eines höhenverstellbaren Schneidwerks**
Method and device for controlling a height-adjustable cutting device
Méthode et dispositif pour controller un outil de coupe à hauteur réglable

(30) Priorität: 26.08.2003 DE 10339551
(43) Veröffentlichungstag der Anmeldung: 02.03.2005
(73) Patentinhaber: CLAAS Selbstfahrende Erntemaschinen GmbH, 33428 Harsewinkel (DE)
(72) Erfinder: Bürmann, Dominik, 33415 Verl (DE)

(56) Entgegenhaltungen:
- DE-A- 2 900 841
- GB-A- 1 106 002
- US-A- 4 507 910
- US-A- 5 937 621

## Beschreibung

Die Erfindung betrifft eine Vorrichtung und ein Verfahren zur Steuerung eines höhenverstellbaren Schneidwerks eines Mähdreschers nach den Oberbegriffen der Ansprüche 1 und 11.

Fahrbare Emtemaschinen, insbesondere Mähdrescher, sind mit einem höhenverstellbaren Schneidwerk versehen, welches das Erntegut vom Feld schneidet und dann aufnimmt. Das Erntegut wird mit einem Messerbalken abgeschnitten und mit einer Einzugsschnecke einer nachfolgenden Drescheinrichtung zugeführt. Das Schneidwerk trägt eine Haspel, die die Annahme des Erntegutes zum Messerbalken und die Weiterförderung zur Einzugsschnecke sicherstellt, so dass ein kontinuierlicher Gutfluss entsteht und die Drescheinrichtung kontinuierlich beschickt wird. Die Funktion der Haspel ist bei liegendem Erntegut besonders wichtig. Die an der Haspel angeordneten Haspelzinken heben das Erntegut an, damit der Messerbalken unter das Erntegut gelangt, um die Halme bodennah abzuschneiden, so dass der Ernteverlust so gering wie möglich ist. Um eine gute Förderleistung zu erreichen, ist die Umfangsgeschwindigkeit der Haspel so eingestellt, dass eine Voreilung zur Vorfahrtgeschwindigkeit des Mähdreschers gegeben ist. Die Höhe der Haspel wird z. B. bei Lagergetreide möglichst niedrig eingestellt, um eine bestmögliche Wirkung zu erzielen. Da das Erntegut auf dem Feld jedoch in der Höhe und der Dichte variiert, muss die Höhe der Haspel ständig angepasst werden. Dies gilt auch, wenn der Bediener eine andere Schnitthöhe des Schneidwerks einstellt.

Um den Bediener während der Fahrt zu entlasten, sind Mähdrescher auf dem Markt, bei denen mehreren Höhen der Haspel, jeweils eine Schnitthöhe des Schneidwerks, eine Haspeldrehzahl und eine Erntebedingung zugeordnet wird. Die Zuordnungen werden in einer Datenspeichereinheit gespeichert, wobei die Höhe der Haspel im laufenden Betrieb verändert und neu gespeichert wird.

Aus der EP 0 377 163 A1 ist eine selbstfahrende Erntemaschine mit einer von einem Antriebsmotor rotierend angetriebenen Haspel bekannt. Die Haspeldrehzahl wird in Abhängigkeit von der Vorfahrtgeschwindigkeit des Mähdreschers geregelt. Die Höhe der Haspel ist so gewählt, dass das Erntegut einerseits nicht unnötig beansprucht wird, andererseits jedoch ein kontinuierlicher Gutfluss gewährleistet ist, wobei die Höhe der Haspel vom Bediener festgelegt wird.

Nachteilig bei diesen bekannten Mähdreschern ist, dass der Bediener die Höhe der Haspel ständig manuell ändern und speichern muss, um die bestmögliche Wirkung der Haspel zu erzielen. Die Einstellung der Höhe ist dabei von der Erfahrung des Bedieners abhängig. Die Höhe wird als fester Erfahrungswert vom Bediener vorgegeben, der die momentanen, sich ständig ändernden Ernteparameter nicht berücksichtigt.

Aus der US 5937621 ist auch ein Verfahren und eine Vorrichtung zur Steuereung eines Schneidwerks bekannt, die dem Oberbegriff der Ansprüche 1 bzw. 11 entsprechen.

Der vorliegenden Erfindung liegt daher die Aufgabe zugrunde einen Mähdrescher derart weiterzuentwickeln, dass der Bediener von der Einstellung der optimalen Höhe der Haspel entlastet wird.

Diese Aufgabe wird erfindungsgemäß durch die kennzeichnenden Merkmale der Ansprüche 1 und 11 gelöst. Weitere vorteilhafte Ausführungen des Erfindungsgegenstandes ergeben sich aus den nachgeordneten Ansprüchen.

Indem die Haspelhöhe lastabhängig verstellbar ist, kann die Haspelhöhe in Abhängigkeit von der von der Haspel auf das Erntegut wirkenden Kraft geregelt werden. Dies hat den Vorteil, dass die Haspel stets in gleicher Weise auf das Erntegut einwirkt.

Indem die Belastung durch die Ermittlung der auf die Haspel wirkenden Zugkraft bestimmt wird, kann im Umkehrschluss die auf das Erntegut ausgeübte Kraft bestimmt werden, da beide Kräfte gleich groß sind und im Gleichgewicht stehen. Dies ermöglicht eine einfache Regelung der Haspelhöhe in Abhängigkeit von nur einem sich änderndem Parameter.

Die Zugkraft wird vorteilhafterweise durch das Haspeldrehmoment definiert, um die Summe aller entlang der Haspel wirkenden Zugkräfte gleichzeitig zu erfassen.

Vorzugsweise gibt der Bediener eine maximale Zugkraft über ein Bedienfeld ein und die maximale Zugkraft wird in einem Datenspeicher der Steuereinheit gespeichert. Der Bediener legt so am Anfang der Erntefahrt einmal den Regelbereich nach Erfahrungswerten fest, und der vorgegebene Wert steht jederzeit für die automatische Regelung der Haspelhöhe zur Verfügung.

Dadurch, dass mittels eines Sensors das Haspeldrehmoment gemessen wird und in Abhängigkeit eines von dem Sensor generierten Signals die Haspelhöhe verstellt wird, kann die unmittelbar auftretende Belastung der Haspel auf das Erntegut bei der Regelung der Haspelhöhe berücksichtigt werden.

Um eine Überempfindlichkeit der Steuerung bei nur geringfügigen oder zeitlich kurzfristigen Abweichungen vom maximal zulässige Haspeldrehmoment zu vermeiden, wird die Haspelhöhe vorteilhafterweise erst verstellt, wenn das ermittelte Haspeldrehmoment um Schwellenwerte und/oder einen bestimmten Zeitraum von dem maximal zulässigen Haspeldrehmoment abweicht.

Indem die Steuereinheit mit dem maximal zulässigen Haspeldrehmoment die Schwellenwerte und ein unteres zulässiges Haspeldrehmoment berechnet, muss der Bediener keine weiteren Wert vorgeben, was eine weitere Entlastung des Fahrers bedeutet.

Dadurch, dass die Regelung der Haspelhöhe vorteilhafterweise so erfolgt, dass die Haspel nach oben verstellt wird, wenn das ermittelte Haspeldrehmoment das im Datenspeicher festgelegte maximale Haspeldrehmoment für einén bestimmten Zeitraum überschreitet und dass die Haspel nach unten verstellt wird, wenn das ermittelte Haspeldrehmoment das untere zulässige Haspeldrehmoment für wenigstens einen bestimmten Zeitraum unterschreitet ist das Programm zur Steuerung sehr einfach aufgebaut.

Indem die Haspelhöhe durch Sollwertkurven vorgegeben ist, die mindestens einen der Parameter, maximal zulässiges Haspeldrehmoment, Haspeldrehzahl, Geschwindigkeit des Mähdreschers, Schneidwerkshöhe, Art des Getreides und weitere Erntebedingungen berücksichtigen, wird das auf die Haspel wirkende maximal zulässige Haspeldrehmoment derart geregelt, dass die Wirkung der Haspel annähernd gleich bleibt.

Die Sollwertkurven sind vorteilhafterweise im Datenspeicher der Steuereinheit gespeichert, damit sie jederzeit zur Regelung der Haspelhöhe zur Verfügung stehen.

Zur Durchführung des erfindungsgemäßen Verfahrens weist ein mit einem üblichen Schneidwerk ausgestatteter Mähdrescher eine Vorrichtung auf, um die Höhe der Haspel auf das für bestimmte Erntebedingungen vorgegebene maximal zulässige Haspeldrehmoment automatisch einzustellen. Die erfindungsgemäße Vorrichtung zur Steuerung der Haspel umfasst vorteilhafterweise einen Sensor zur Erfassung der Haspelzugkraft und einen Drehwinkelsensor zur Erfassung der Haspelhöhe, wobei der Drehwinkelsensor und der Sensor zur Erfassung der Haspelzugkraft an eine Steuereinheit gekoppelt sind, und die Haspelhöhe mit der Steuereinheit lastabhängig verstellbar ist. Die Vorrichtung kann ohne großen baulichen Aufwand ausgeführt werden, da die verwendeten elektronischen Bauteile auf einfache Weise an die vorhandenen mechanischen Bauteile angeschlossen werden können.

Der Sensor kann beispielsweise als Drucksensor ausgeführt sein und das Drehantriebssystem beispielsweise ein hydraulisches Drehantriebssystem sein, wobei der Drucksensor in dem hydraulischem Drehantriebssystem angeordnet ist und einen Druck generiert, der sich abhängig vom Haspeldrehmoment ändert.

Bei einem weiteren Ausführungsbeispiel ist der Sensor als elektrisches Strommessgerät ausgeführt und das Drehantriebsystem ist ein elektrisches Drehantriebsystem, wobei das Strommessgerät in dem. elektrischen Drehantriebsystem angeordnet ist und einen Strom misst, der sich abhängig vom Haspeldrehmoment ändert.

Weitere vorteilhafte Ausgestattungen sind Gegenstand weiterer Unteransprüche und werden nachfolgend anhand von Zeichnungen näher erläutert.

Es zeigen:
- Fig.1: einen Mähdrescher in der Seitenansicht;
- Fig.2: einen vergrößerten Ausschnitt des Schneidwerks eines erfindungsgemäßen Mähdreschers gemäß Figur 1 einschließlich der Antriebssysteme und der erfindungsgemäßen Steuerung

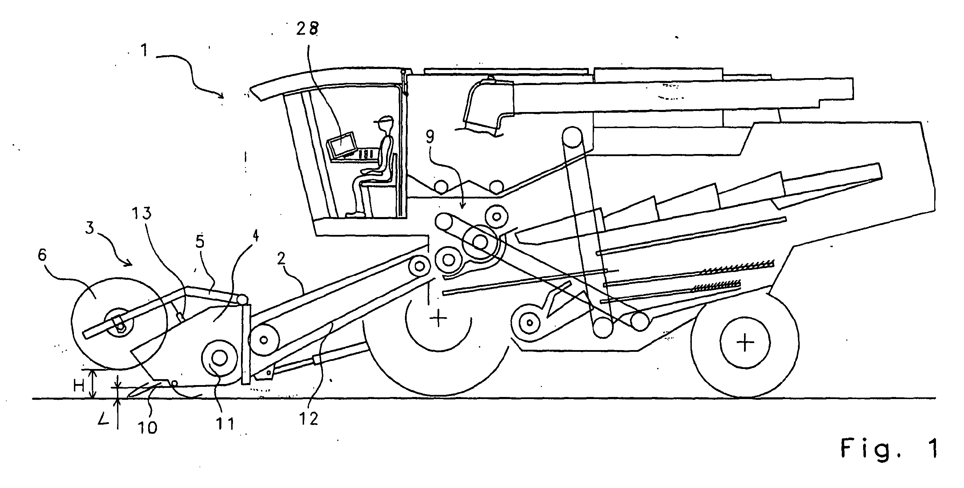

In der Fig. 1 ist ein Mähdrescher 1 in der Seitenansicht dargestellt, an dessen vertikal schwenkbarem Einzugsschacht 2 ein Schneidwerk 3 angeordnet ist. Mit dem schwenkbaren Einzugsschacht 2 ist das Schneidwerk 3 auf eine gewünschte Schnitthöhe L einstellbar. Das Schneidwerk 3 besteht aus einem Schneidtisch 4, und aus einer an zwei höhenverschwenkbaren Haspeltragarmen 5 an dem Schneidtisch 4 befestigten Haspel 6. Zwischen dem Schneidtisch 4 und den Haspeltragarmen 5 sind zwei Hydraulikzylinder 13 angelenkt, mit denen die Haspeltragarme 5 um einen Gelenkpunkt drehend, verschwenkt werden und dabei die Höhenlage der Haspel 6 ändern. Zusätzlich sind zwischen den Haspeltragarmen 5 und der Haspel 6 zwei weitere Hydraulikzylinder 17 angebracht, mit denen die Lage der Haspel in horizontaler Richtung in Relation zum Schneidtisch 4 eingestellt wird.

Die mit einem Motor 8 rotierend angetriebene Haspel 6 sorgt erstens für eine kontinuierliche Annahme des Erntegutes sowie für dessen gleichmäßige Förderung durch das Schneidwerk 3 und den Einzugsschacht 2 zu einer an sich bekannten und daher hier nicht näher erläuterten Drescheinrichtung 9 des Mähdreschers 1. Das Erntegut wird mit einem an der vorderen Kante des Schneidtisches 4 angebrachten Messerbalken 10 abgeschnitten und das abgeschnittene Erntegut anschließend mit Hilfe der Haspel 6 zu einer im Schneidtisch 3 angeordneten, rotierend angetriebenen Einzugsschnecke 11 gefördert. Die Einzugsschnecke 11 führt das Erntegut dem Einzugsschacht 2 zu. In dem Einzugsschacht 2 läuft ein Schrägförderer 12, der das Erntegut zur Drescheinrichtung 9 weiterfördert.

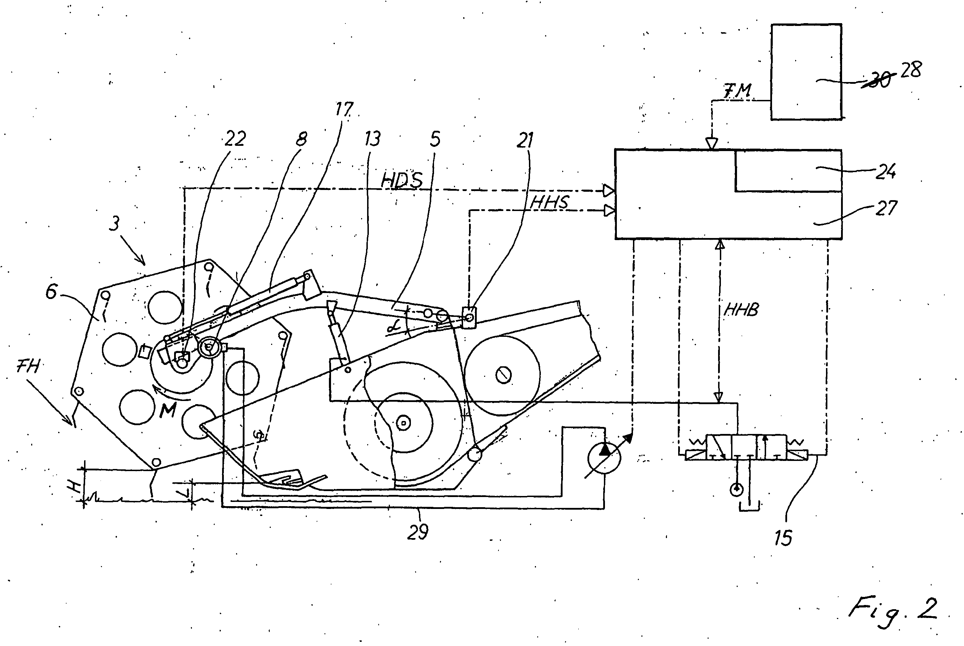

Fig.2 zeigt einen Ausschnitt des Schneidwerks 3 des Mähdreschers 1 gemäß Figur 1 einschließlich der dort angeordneten Sensoren 21, 22, eine mit einem Datenspeicher 24 ausgestattete Steuereinheit 27 und ein Bedienfeld 28.

Die momentane Haspelhöhe H der Haspel 6 wird mit einem im Gelenkpunkt angebrachten Drehwinkelsensor 21 gemessen, der einen Drehwinkel α der Haspeltragarme 5 misst. Das von dem Drehwinkelsensor 21 erzeugte Signal HHS ist direkt proportional zur Haspelhöhe H.

Der Motor 8 ist ein Hydraulikmotor der von einem hydraulischen Antriebsystem 29 angetrieben wird. In dem hydraulischen Antriebsystem 29 ist ein Drucksensor 22 installiert, mit dem ein hydraulischer Druck generiert wird, der sich abhängig vom Haspeldrehmoment M ändert. Das von dem Drucksensor 22 erzeugte Signal HDS ist proportional zu einer an der Haspel 6 wirkenden Belastung. Die Belastung der Haspel 6 wird durch die Ermittlung der auf die Haspel 6 wirkenden Zugkraft FH bestimmt, die durch das Haspeldrehmoment M definiert ist.

Die Signale HHS und HDS werden der mit dem Drehwinkelsensor 21 und dem Drucksensor 22 verbundenen Steuereinheit 27 zugeführt.

An diese Steuereinheit 27 ist außerdem ein Bedienfeld 28 angeschlossen, über das der Fahrer eine maximale Zugkraft FM vorgibt, die in der Steuereinheit 27 in ein maximal zulässiges Haspeldrehmoment umgerechnet wird.

Die Steuereinheit 27 berechnet mit dem maximal zulässigen Haspeldrehmoment einen oberen Schwellenwert und einen unteren Schwellenwert sowie ein unteres zulässiges Haspeldrehmoment.

Die Steuereinheit 27 wertet die von den Sensoren 21, 22 zur Verfügung gestellten Signale HHS und HDS aus. Dazu berechnet die Steuereinheit die Abweichung zwischen dem maximal zulässigen Haspeldrehmoment und dem Haspeldrehmoment M. In Abhängigkeit von der von der Steuereinheit 27 berechneten Abweichung des Haspeldrehmomentes M zum maximal zulässigen Haspeldrehmoment wird dann ein entsprechender Steuerbefehl HHB an das hydraulische Hubantriebssystem 15 gegeben, das an die Hydraulikzylinder 13 angeschlossen ist und die Hydraulikzylinder 13 entsprechend dem Steuerbefehl HHB ein- bzw. ausfährt, um die Haspelhöhe H zu senken oder anzuheben.

Die Haspel 6 wird mit dem hydraulischen Hubantriebsystem 15 nach oben verstellt, wenn das gemessene Haspeldrehmoment M das maximal zulässige Haspeldrehmoment für einen bestimmten Zeitraum überschreitet und nach unten verstellt, wenn das gemessene Haspeldrehmoment M das untere zulässige Haspeldrehmoment für einen bestimmten Zeitraum unterschreitet.

Die Verstellung der Haspel erfolgt jedoch nur, wenn das ermittelte Haspeldrehmoment M um die bestimmten Schwellenwerte und/ oder einen bestimmten Zeitraum von dem maximal zulässigen Haspeldrehmoment abweicht.

Bei einer bevorzugten Ausführungsform sind zur Regelung des maximal zulässigen Haspeldrehmomentes im Datenspeicher 24 der Steuereinheit 27 Sollwertkurven für eine Haspelhöhe H vorgegeben, die die Höhe der Haspel 6 in Abhängigkeit vom maximal zulässigen Haspeldrehmoment, der Haspeldrehzahl, der Geschwindigkeit des Mähdreschers 1, der Schneidwerkshöhe, der Art des Getreides und weiteren Erntebedingungen festlegt.

Der Motor 8 für die Rotation der Haspel 6 kann auch ein Elektromotor sein, der von einem elektrischen Drehantriebssystem angetrieben wird. In dem elektrischen Drehantriebsystem ist ein Strommessgerät angeordnet, welches einen Strom misst, der sich abhängig vom Haspeldrehmoment M ändert.

Es wird abschließend noch einmal darauf hingewiesen, dass es sich in den Figuren dargestellten Mähdrescher 1 und der Steuerung 27 sowie dem im Zusammenhang damit erläuterten konkreten Verfahren lediglich um Ausführungsbeispiele handelt, welche vom Fachmann in vielfacher Hinsicht variiert werden können, ohne den Rahmen der Ansprüche zu verlassen.

### Bezugszeichenliste:

- 1: Mähdrescher
- 2: Einzugsschacht
- 3: Schneidwerk
- 4: Schneidtisch
- 5: Haspeltragarm
- 6: Haspel
- 8: Motor
- 9: Drescheinrichtung
- 10: Messerbalken
- 11: Einzugsschnecke
- 12: Schrägförderer
- 13: Hydraulikzylinder
- 15: Hubantriebssystem
- 17: Hydraulikzylinder
- 18: Gelenkpunkt
- 21: Drehwinkelsensor
- 22: Drucksensor
- 24: Datenspeicher
- 27: Steuereinheit
- 28: Bedienfeld
- 29: Hydraulisches Drehantriebssystem

- FH: Zugkraft
- FM: Maximale Zugkraft
- H: Haspelhöhe
- L: Schnitthöhe
- M: Haspeldrehmoment
- α: Drehwinkel
- HHS: Haspelhöhensignal
- HDS: Haspeldrehmomentsignal
- HHB: Haspelhöhenbefehl

## Patentansprüche

1. Verfahren zur Steuerung eines höhenverstellbaren Schneidwerks (3) eines Mähdreschers (1), mit einer rotierend angetriebenen und höhenverstellbaren Haspel (6),
**dadurch gekennzeichnet,**
**dass** die Haspelhöhe (H) lastabhängig verstellbar ist.

2. Verfahren nach Anspruch 1,
**dadurch gekennzeichnet,**
**dass** die Belastung durch die Ermittlung der auf die Haspel (6) wirkenden Zugkraft (FH) bestimmt wird.

3. Verfahren nach Anspruch 2,
**dadurch gekennzeichnet,**
**dass** die Zugkraft (FH) durch das Haspeldrehmoment (M) definiert wird.

4. Verfahren nach Anspruch 2,
**dadurch gekennzeichnet,**
**dass** der Bediener eine maximale Zugkraft durch Eingabe über ein Bedienfeld (28) vorgibt und die maximale Zugkraft (FM) im Datenspeicher (24) einer Steuereinheit (27) gespeichert wird.

5. Verfahren nach wenigstens einem der vorhergehenden Ansprüche,
**dadurch gekennzeichnet,**
**dass** mittels eines Sensors (22) das Haspeldrehmoment (M) gemessen wird und in Abhängigkeit eines von dem Sensor (22) generierten Haspeldrehmomentsignals (HDS) die Haspelhöhe (H) verstellt wird.

6. Verfahren nach Ansprüche 3 und 4,
**dadurch gekennzeichnet,**
**dass** die Haspelhöhe (H) erst verstellt wird, wenn das ermittelte Haspeldrehmoment (M) um Schwellenwerte und/oder einen bestimmten Zeitraum von dem maximal zulässigen Haspeldrehmoment abweicht.

7. Verfahren nach Ansprüche 3 und 4,
**dadurch gekennzeichnet,**
**dass** die Steuereinheit (27) mit dem maximal zulässigen Haspeldrehmoment die Schwellenwerte und ein unteres zulässiges Haspeldrehmoment errechnet.

8. Verfahren nach Ansprüche 3 und 4,
**dadurch gekennzeichnet,**
**dass** die Haspel (6) nach oben verstellt wird, wenn das ermittelte Haspeldrehmoment (M) das maximale Haspeldrehmoment für wenigstens einen Zeitraum überschreitet und,
**dass** die Haspel (6) nach unten verstellt wird, wenn das ermittelte Haspeldrehmoment (M) das untere zulässige Haspeldrehmoment für wenigstens einen Zeitraum unterschreitet.

9. Verfahren nach wenigstens einem der vorhergehenden Ansprüche,
**dadurch gekennzeichnet,**
**dass** die Haspelhöhe (H) durch Sollwertkurven vorgegeben wird, die mindestens einen der Parameter, maximal zulässiges Haspeldrehmoment, Haspeldrehzahl, Geschwindigkeit des Mähdreschers, Schneidwerkshöhe, Art des Getreides und weitere Emtebedingungen berücksichtigen.

10. Verfahren nach Anspruch 9,
**dadurch gekennzeichnet,**
**dass** die Sollwertkurven in einem Datenspeicher (24) einer Steuereinheit (27) gespeichert sind.

11. Vorrichtung zur Steuerung eines höhenverstellbaren Schneidwerks (3) eines Mähdreschers (1), mit einer drehenden und höhenverstellbaren Haspel (6),
**dadurch gekennzeichnet,**
**dass** die Vorrichtung wenigstens einen Sensor (22) zur Erfassung der Haspelzugkraft (FH) und wenigstens einen Drehwinkelsensor (21) zur Erfassung der Haspelhöhe (H) aufweist, und dass der Drehwinkelsensor (21) und der Sensor (22) an eine Steuereinheit (27) gekoppelt sind, mit der die Haspelhöhe (H) lastabhängig verstellbar ist.

12. Vorrichtung nach Anspruch 10,
**dadurch gekennzeichnet,**
**dass** der Sensor (22) als Drucksensor (22) ausgeführt ist und ein Drehantriebssystem ein hydraulisches Drehantriebssystem (29) ist, wobei der Drucksensor (22) in dem hydraulischem Drehantriebssystem (29) angeordnet ist und einen Druck generiert, der sich abhängig vom Haspeldrehmoment (M) ändert.

13. Vorrichtung nach wenigstens einem der vorhergehenden Ansprüche,
**dadurch gekennzeichnet,**
**dass** der Sensor (22) als Strommessgerät ausgeführt ist und dass ein Drehantriebsystem ein elektrisches Drehantriebsystem ist, wobei das Strommessgerät in dem elektrischen Drehantriebsystem angeordnet ist und einen Strom misst, der sich abhängig vom Haspeldrehmoment (M) ändert.

## Claims

1. A method of controlling a height-adjustable cutting mechanism (3) of a combine harvester (1) comprising a height-adjustable reel (6) which is driven in rotation,
**characterised in that**
the reel height (H) is adjustable in dependence on load.

2. A method according to claim 1 **characterised in that** the loading is determined by ascertaining the tensile force (FH) acting on the reel (6).

3. A method according to claim 2 **characterised in that** the tensile force (FH) is defined by the reel torque (M).

4. A method according to claim 2 **characterised in that** the operator predetermines a maximum tensile force by input by way of an operating panel (28) and the maximum tensile force (FM) is stored in the data memory (24) of a control unit (27).

5. A method according to at least one of the preceding claims **characterised in that** the reel torque (M) is measured by means of a sensor (22) and the reel height (H) is adjusted in dependence on a reel torque signal (HDS) generated by the sensor (22).

6. A method according to claims 3 and 4 **characterised in that** the reel height (H) is only adjusted when the ascertained reel torque (M) deviates from the maximum permissible reel torque by threshold values and/or a given period of time.

7. A method according to claims 3 and 4 **characterised in that** the control unit (27) calculates with the maximum permissible reel torque the threshold values and a lower permissible reel torque.

8. A method according to claims 3 and 4 **characterised in that** the reel (6) is adjusted upwardly when the ascertained reel torque (M) exceeds the maximum reel torque for at least a period of time and the reel (6) is adjusted downwardly when the ascertained reel torque (M) is below the lower permissible reel torque for at least a period of time.

9. A method according to at least one of the preceding claims **characterised in that** the reel height (H) is predetermined by reference value curves which take account of at least one of the parameters maximum permissible reel torque, reel rotary speed, speed of the combine harvester, cutting mechanism height, nature of the crop and further harvest conditions.

10. A method according to claim 9 **characterised in that** the reference value curves are stored in a data memory (24) of a control unit (26).

11. Apparatus for controlling a height-adjustable cutting mechanism (3) of a combine harvester (1) having a rotating and height-adjustable reel (6),
**characterised in that**
the apparatus has at least one sensor (22) for detecting the reel tensile force (FH) and at least one rotary angle sensor (21) for detecting the reel height (H), and the rotary angle sensor (21) and the sensor (22) are coupled to a control unit (27) with which the reel height (H) is adjustable in dependence on load.

12. Apparatus according to claim 10 **characterised in that** the sensor (22) is in the form of a pressure sensor (22) and a rotary drive system is a hydraulic rotary drive system (29), wherein the pressure sensor (22) is arranged in the hydraulic rotary drive system (29) and generates a pressure which changes in dependence on the reel torque (M).

13. Apparatus according to at least one of the preceding claims **characterised in that** the sensor (22) is in the form of a current measuring device and that a rotary drive system is an electric rotary drive system, wherein the current measuring device is arranged in the electric rotary drive system and measures a current which changes in dependence on the reel torque (M).

## Revendications

1. Méthode pour commander un outil de coupe (3) réglable en hauteur d'une moissonneuse-batteuse (1) équipée d'un rabatteur (6) entraîné en rotation et réglable en hauteur, **caractérisée en ce que** la hauteur (H) du rabatteur peut être réglée en fonction de la charge.

2. Méthode selon la revendication 1, **caractérisée en ce que** la charge est définie en déterminant la force de traction (FH) agissant sur le rabatteur (6).

3. Méthode selon la revendication 2, **caractérisée en ce que** la force de traction (FH) est définie par le couple (M) du rabatteur.

4. Méthode selon la revendication 2, **caractérisée en ce que** l'utilisateur prédéfinit une force maximale de traction (FM) en l'entrant par l'intermédiaire d'un tableau de commande (28), et cette force est enregistrée dans la mémoire de données (24) d'une unité de commande (27).

5. Méthode selon au moins une des revendications précédentes, **caractérisée en ce qu'**un capteur (22) mesure le couple (M) du rabatteur, et la hauteur (H) de celui-ci est réglée en fonction d'un signal de couple du rabatteur (HDS) généré par le capteur (22).

6. Méthode selon les revendications 3 et 4, **caractérisée en ce que** la hauteur (H) du rabatteur est modifiée seulement si le couple établi (M) du rabatteur s'écarte en dépassant des valeurs de seuil et/ou pendant un certain intervalle de temps, du couple maximal admissible du rabatteur.

7. Méthode selon les revendications 3 et 4, **caractérisée en ce que** l'unité de commande (27) calcule au moyen du couple maximal admissible du rabatteur les valeurs de seuil et un couple minimal admissible du rabatteur.

8. Méthode selon les revendications 3 et 4, **caractérisée en ce que** le rabatteur (6) est déplacé vers le haut si le couple établi (M) du rabatteur dépasse le couple maximal admissible pendant au moins un certain intervalle de temps, et le rabatteur (6) est déplacé vers le bas si le couple établi (M) du rabatteur passe en dessous du couple minimal admissible pendant au moins un certain intervalle de temps.

9. Méthode selon au moins les revendications précédentes, **caractérisée en ce que** la hauteur (H) du rabatteur est prédéfinie par des courbes de valeurs de consigne qui prennent en compte au moins un des paramètres que sont le couple maximal admissible du rabatteur, la vitesse de celui-ci, la vitesse de la moissonneuse-batteuse, la hauteur de l'outil de coupe, le genre de céréale ainsi que d'autres conditions de récolte.

10. Méthode selon la revendication 9, **caractérisée en ce que** les courbes de valeurs de consigne sont enregistrées dans une mémoire de données (24) d'une unité de commande (27).

11. Dispositif pour commander un outil de coupe (3) réglable en hauteur d'une moissonneuse-batteuse (1) équipée d'un rabatteur (6) entraîné en rotation et réglable en hauteur, **caractérisé en ce que** ce dispositif comporte au moins un capteur (22) pour saisir la force de traction (FH) du rabatteur et au moins un capteur (21) d'angle de rotation, ces capteurs (21 et 22) étant couplés à une unité de commande par laquelle la hauteur (H) du rabatteur peut être réglée en fonction de la charge.

12. Dispositif selon la revendication 10, **caractérisé en ce que** le capteur (22) est un capteur de pression et le système d'entraînement en rotation est un système hydraulique (29) dans lequel est monté le capteur de pression (22) qui génère une pression variant en fonction du couple (M) du rabatteur.

13. Dispositif selon au moins une des revendications précédentes, **caractérisé en ce que** le capteur (22) est un appareil de mesure d'intensité et que le système d'entraînement en rotation est un système électrique dans lequel est monté l'appareil de mesure d'intensité qui contrôle une intensité variant en fonction du couple (M) du rabatteur.
